(19) Europäisches Patentamt
European Patent Office
Office européen des brevets

(11) **EP 3 902 272 A1**

(12) **EUROPEAN PATENT APPLICATION**
published in accordance with Art. 153(4) EPC

(43) Date of publication:
27.10.2021 Bulletin 2021/43

(51) Int Cl.:
*H04N 21/435* (2011.01)     *H04L 29/06* (2006.01)

(21) Application number: 19897732.4

(22) Date of filing: 17.01.2019

(86) International application number:
PCT/CN2019/072181

(87) International publication number:
WO 2020/124725 (25.06.2020 Gazette 2020/26)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 19.12.2018 CN 201811559034

(71) Applicant: Wangsu Science & Technology Co.,
Ltd.
Shanghai 200030 (CN)

(72) Inventor: LIN, Xinjian
Shanghai 200030 (CN)

(74) Representative: De Arpe Tejero, Manuel
Arpe Patentes y Marcas
Alcalá, 26, 5ª Planta
28014 Madrid (ES)

(54) **AUDIO AND VIDEO PUSHING METHOD AND AUDIO AND VIDEO STREAM PUSHING CLIENT BASED ON WEBRTC PROTOCOL**

(57) The present disclosure provides a method and a stream-pushing client terminal for pushing audio and video based on a WebRTC protocol, and belongs to the field of streaming media technology. The method includes: calling, by a stream-pushing client terminal, an audio interface of a browser to create an audio processing module, and configuring a hybrid output unit on the audio processing module; inputting, by the stream-pushing client terminal, source data and additional data to the audio processing module, and generating processed data through the hybrid output unit; combining, by the stream-pushing client terminal, the source data and the processed data to generate hybrid sound data; and pushing, by the stream-pushing client terminal, the hybrid sound data to a resource server, to enable a stream-pulling client terminal to obtain the hybrid sound data from the resource server. The present disclosure can reduce bandwidth used in the transmission process.

EP 3 902 272 A1

```
┌─────────────────────────────────────────────────────┐
│ Calling, by a stream-pushing client terminal, an     │  101
│ audio interface of a browser to create an audio       │
│ processing module, and configuring a hybrid output    │
│ unit on the audio processing module                   │
└─────────────────────────────────────────────────────┘
                          │
                          ▼
┌─────────────────────────────────────────────────────┐
│ Inputting, by the stream-pushing client terminal,     │  102
│ source data and additional data to the audio          │
│ processing module, and generating processed data      │
│ through the hybrid output unit                         │
└─────────────────────────────────────────────────────┘
                          │
                          ▼
┌─────────────────────────────────────────────────────┐
│ Combining, by the stream-pushing client terminal,     │  103
│ the source data and the processed data to generate    │
│ hybrid sound data                                      │
└─────────────────────────────────────────────────────┘
                          │
                          ▼
┌─────────────────────────────────────────────────────┐
│ Pushing, by the stream-pushing client terminal, the   │  104
│ hybrid sound data to a resource server, to enable a   │
│ stream-pulling client terminal to obtain the hybrid   │
│ sound data from the resource server                    │
└─────────────────────────────────────────────────────┘
```

**Figure 1**

**Description**

FIELD OF THE DISCLOSURE

The present disclosure generally relates to the field of streaming media technology and, more particularly, relates to a method and a stream-pushing client terminal for pushing audio and video based on a WebRTC protocol.

BACKGROUND

With the continuous development of Internet technology, real-time audio and video communication is increasingly popular for people, and more and more people listen to live audio or watch live video through a network. The Web real-time communication (WebRTC) protocol can support a web browser for performing real-time voice conversation or video conversation, can achieve real-time transmission of video and audio based on the browser, and has been widely used in the above business scenarios.

When broadcasting live audio and video through the WebRTC protocol, a stream-pushing client terminal can first establish a WebRTC connection with a resource server. When recording the live video, the stream-pushing client terminal can push the recorded live audio and video data (also referred to as source data) to the resource server based on the WebRTC connection. After that, a stream-pulling client terminal that has established the WebRTC connection with the resource server can obtain the source data of the live broadcast from the resource server, and, thus, play the above live video.

In the process of implementing the present disclosure, the inventors have found that existing technologies have at least the following issues.

In the process of transmitting audio and video using the WebRTC protocol, if audio data, e.g., background music and special sound effect, etc., wants to be added in the source data, the to-be-added audio data (also referred to as additional data) and the source data can only be transmitted separately, and then be played simultaneously. However, some browsers do not support the simultaneous playing of multiple audio and video data, and cannot play the source data and the additional data simultaneously. Further, in view of this, the transmission process will occupy a substantially high bandwidth. The source data and the additional data can only be recorded separately, which does not facilitate playback.

BRIEF SUMMARY OF THE DISCLOSURE

To solve the issues in existing technologies, the disclosed embodiments of the present disclosure provide a method and a stream-pushing client terminal for pushing audio and video based on a WebRTC protocol. The technical solutions include following.

One aspect of the present disclosure includes a method for pushing audio and video based on a WebRTC protocol. The method includes:

calling, by a stream-pushing client terminal, an audio interface of a browser to create an audio processing module, and configuring a hybrid output unit on the audio processing module;
inputting, by the stream-pushing client terminal, source data and additional data to the audio processing module, and generating processed data through the hybrid output unit;
combining, by the stream-pushing client terminal, the source data and the processed data to generate hybrid sound data; and
pushing, by the stream-pushing client terminal, the hybrid sound data to a resource server, to enable a stream-pulling client terminal to obtain the hybrid sound data from the resource server.

Further, the method includes:

configuring, by the stream-pushing client terminal, a source data input unit and an additional data input unit on the audio processing module;
building, by the stream-pushing client terminal, a source data processing line through the source data input unit and the hybrid output unit; and
building, by the stream-pushing client terminal, an additional data processing line through the additional data input unit and the hybrid output unit.

Further, inputting, by the stream-pushing client terminal, the source data and the additional data to the audio processing module, and generating the processed data through the hybrid output unit include:

inputting, by the stream-pushing client terminal, the source data to the source data input unit, and importing output data of the source data input unit into the hybrid output unit through the source data processing line;

inputting, by the stream-pushing client terminal, the additional data to the additional data input unit, and importing output data of the additional data input unit into the hybrid output unit through the additional data processing line; and

through the hybrid output unit, processing, by the stream-pushing client terminal, the output data of the source data input unit and the output data of the additional data input unit to generate the processed data.

Further, a source volume adjustment unit is configured between the source data input unit and the hybrid output unit on the source data processing line, where:

importing, by the stream-pushing client terminal, the output data of the source data input unit into the hybrid output unit through the source data processing line includes:

through the source data processing line, importing, by the stream-pushing client terminal, the output data of the source data input unit into the source volume adjustment unit, and importing output data of the source volume adjustment unit into the hybrid output unit.

Further, an additional volume adjustment unit is configured between the additional data input unit and the hybrid output unit on the additional data processing line, where:

importing, by the stream-pushing client terminal, the output data of the additional data input unit into the hybrid output unit through the additional data processing line includes: [0025] through the additional data processing line, importing, by the stream-pushing client terminal, the output data of the additional data input unit into the additional volume adjustment unit, and importing output data of the additional volume adjustment unit into the hybrid output unit.

Further, inputting, by the stream-pushing client terminal, the additional data to the additional data input unit includes:

calling, by the stream-pushing client terminal, a 'decodeAudioData' function of the audio processing module to decode the additional data, and inputting the decoded additional data to the additional data input unit.

Further, combining, by the stream-pushing client terminal, the source data and the processed data to generate the hybrid sound data includes:

calling, by the stream-pushing client terminal, a data processing interface of the browser to extract video data in the source data;

calling, by the stream-pushing client terminal, the data processing interface of the browser to extract audio data in the processed data; and

calling, by the stream-pushing client terminal, the data processing interface of the browser to combine the video data and the audio data to generate the hybrid sound data.

Further, the method includes:

calling, by the stream-pushing client terminal, a data collection interface of the browser to collect the source data, and inputting the source data to the audio processing module.

Further, the method includes:

calling, by the stream-pushing client terminal, an additional data interface of the browser to obtain the additional data, and inputting the additional data to the audio processing module.

Further, pushing, by the stream-pushing client terminal, the hybrid sound data to the resource server includes:

calling, by the stream-pushing client terminal, a connection interface of the browser to create a push module;

establishing, by the stream-pushing client terminal, a connection with the resource server through the push module; and

inputting, by the stream-pushing client terminal, the hybrid sound data to the push module, and pushing the hybrid sound data to the resource server through the push module.

Another aspect of the present disclosure includes a stream-pushing client terminal for pushing audio and video based on a WebRTC protocol. The stream-pushing client terminal is configured to:

call an audio interface of a browser to create an audio processing module, and configure a hybrid output unit on the audio processing module;

input source data and additional data to the audio processing module, and generate processed data through the hybrid output unit;

combine the source data and the processed data to generate hybrid sound data; and

push the hybrid sound data to a resource server, to enable a stream-pulling client terminal to obtain the hybrid sound data from the resource server.

Further, the stream-pushing client terminal is further configured to:

configure a source data input unit and an additional data input unit on the audio processing module;
build a source data processing line through the source data input unit and the hybrid output unit; and
build an additional data processing line through the additional data input unit and the hybrid output unit.

Further, the stream-pushing client terminal is specifically configured to:

input the source data to the source data input unit, and import output data of the source data input unit into the hybrid output unit through the source data processing line;
input the additional data to the additional data input unit, and import output data of the additional data input unit into the hybrid output unit through the additional data processing line; and
through the hybrid output unit, process the output data of the source data input unit and the output data of the additional data input unit to generate the processed data.

Further, a source volume adjustment unit is configured between the source data input unit and the hybrid output unit on the source data processing line; and
the stream-pushing client terminal is specifically configured to through the source data processing line, import the output data of the source data input unit into the source volume adjustment unit, and import output data of the source volume adjustment unit into the hybrid output unit.
Further, an additional volume adjustment unit is configured between the additional data input unit and the hybrid output unit on the additional data processing line; and
the stream-pushing client terminal is specifically configured to through the additional data processing line, import the output data of the additional data input unit into the additional volume adjustment unit, and import output data of the additional volume adjustment unit into the hybrid output unit.
Further, the stream-pushing client terminal is specifically configured to:
call a 'decodeAudioData' function of the audio processing module to decode the additional data, and input the decoded additional data to the additional data input unit.
Further, the stream-pushing client terminal is specifically configured to:

call a data processing interface of the browser to extract video data in the source data;
call the data processing interface of the browser to extract audio data in the processed data; and
call the data processing interface of the browser to combine the video data and the audio data to generate the hybrid sound data.

Further, the stream-pushing client terminal is configured to:
call a data collection interface of the browser to collect the source data, and input the source data to the audio processing module.
Further, the stream-pushing client terminal is configured to:
call an additional data interface of the browser to obtain the additional data, and input the additional data to the audio processing module.
Further, the stream-pushing client terminal is specifically configured to:

call a connection interface of the browser to create a push module;
establish a connection with the resource server through the push module; and
input the hybrid sound data to the push module, and push the hybrid sound data to the resource server through the push module.

The technical solutions in the disclosed embodiments of the present disclosure may have the following beneficial effects.
In the disclosed embodiments of the present disclosure, the stream-pushing client terminal may call the audio interface of the browser to create the audio processing module, and may configure the hybrid output unit on the audio processing module. The stream-pushing client terminal may input the source data and the additional data into the audio processing module, and may generate the processed data through the hybrid output unit. The stream-pushing client terminal may combine the source data and the processed data to generate the hybrid sound data. The stream-pushing client terminal may push the hybrid sound data to the resource server, such that the stream-pulling client terminal may obtain the hybrid sound data from the resource server. In view of this, the source data and the additional data may be combined into one piece of hybrid sound data, which may reduce the transmission of one piece of data during the transmission process, and may reduce the bandwidth used in the transmission process. Merely one piece of data may need to be processed during playing and recording, which may support a substantially wide variety of browsers for playing, and may facilitate playback later.

BRIEF DESCRIPTION OF THE DRAWINGS

To more clearly illustrate the technical solutions in the disclosed embodiments of the present disclosure, drawings to be used in the description of the embodiments will be briefly described below. It is obvious that the drawings in the following description are certain embodiments of the present disclosure, and other drawings may be obtained by a person of ordinary skill in the art in view of the drawings provided without creative efforts.

Figure 1 illustrates a flowchart of a method for pushing audio and video based on a WebRTC protocol consistent with an embodiment of the present disclosure;
Figure 2 illustrates a processing flowchart of generating processed data from source data and additional data in a method for pushing audio and video based on a WebRTC protocol consistent with an embodiment of the present disclosure;
Figure 3 illustrates a processing flowchart of combining source data and processed data to obtain hybrid sound data in a method for pushing audio and video based on a WebRTC protocol consistent with an embodiment of the present disclosure;
Figure 4 illustrates a schematic diagram of a stream-pushing client terminal pushing hybrid sound data to a resource server in a method for pushing audio and video based on a WebRTC protocol consistent with an embodiment of the present disclosure;
Figure 5 illustrates a schematic structural diagram of a stream-pushing client terminal for pushing audio and video based on a WebRTC protocol consistent with an embodiment of the present disclosure;
Figure 6 illustrates a schematic structural diagram of another stream-pushing client terminal for pushing audio and video based on a WebRTC protocol consistent with an embodiment of the present disclosure;
Figure 7 illustrates a schematic structural diagram of another stream-pushing client terminal for pushing audio and video based on a WebRTC protocol consistent with an embodiment of the present disclosure; and
Figure 8 illustrates a schematic structural diagram of another stream-pushing client terminal for pushing audio and video based on a WebRTC protocol consistent with an embodiment of the present disclosure.

DETAILED DESCRIPTION

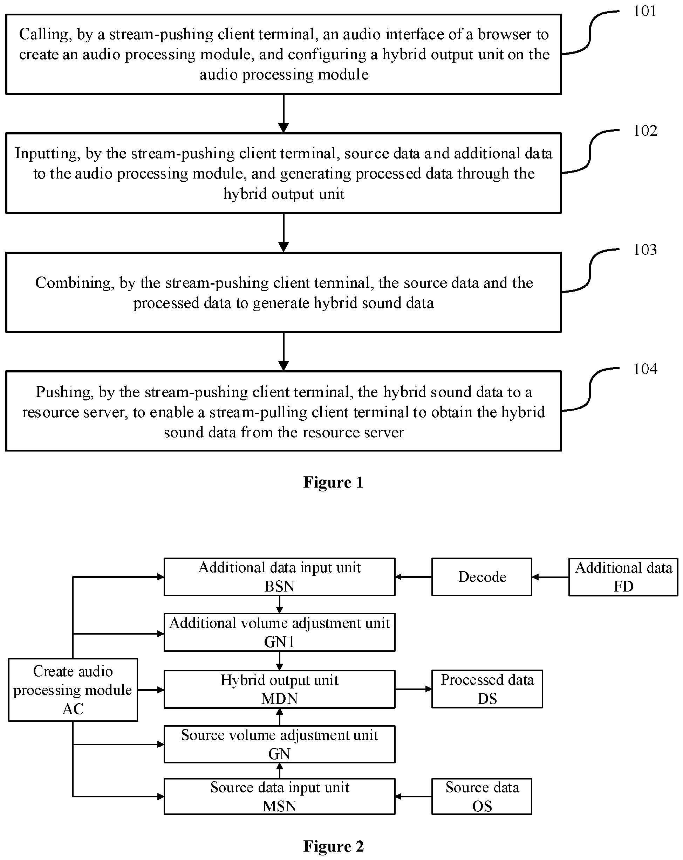

For clearer understanding of the aims, technical solutions and effects of the present disclosure, specific embodiments of the present disclosure are now described in detail with reference to the accompanying drawings.
The disclosed embodiments of the present disclosure provide a method for pushing audio and video based on a WebRTC protocol. The method may be applied to a stream-pushing client terminal that uses the WebRTC protocol to transmit live audio and video data, and may be specifically achieved by a push module configured in the stream-pushing client terminal. The stream-pushing client terminal may establish a connection with a resource server through the WebRTC protocol, and may push the live data stream to the resource server based on the connection. All the processing of the stream-pushing client terminal described below may be understood as being actually performed by the push module in the stream-pushing client terminal. The application scenario of the present disclosure may include following. The stream-pushing client terminal may collect live audio and video data through a device, e.g., a camera or a microphone, etc., as source data, and at the same time, may obtain audio data that wants to be added into the source data through network download or any other method as additional data. After that, the stream-pushing client terminal may generate the processed data after processing the source data and the additional data. Then, the stream-pushing client terminal may combine the source data and the processed data to obtain hybrid sound data having the additional data added into the source data. The stream-pushing client terminal may push the hybrid sound data to the resource server through the WebRTC connection established with the resource server, such that a stream-pulling client terminal may obtain the hybrid sound data from the resource server.
A detailed description of a process for pushing audio and video based on a WebRTC protocol illustrated in Figure 1 will be described below in combination with specific embodiments, and the content may include following.
In step 101: A stream-pushing client terminal may call an audio interface of a browser to create an audio processing module, and may configure a hybrid output unit on the audio processing module.
In the implementation, when the stream-pushing client terminal is used for broadcasting live audio and video, a browser using an AudioContext interface as the audio interface may be installed on the stream-pushing client terminal. The stream-pushing client terminal may call the AudioContext interface of the browser to create the audio processing module AC, and then may configure the hybrid output unit MDN (MediaStreamAudioDestinationNode) for combining and outputting source data OS (Original Stream) and additional data FD (FileData) in the audio processing module AC through a 'createMediaStreamDestination' function. The configuration method may use the following formula:

$$MDN = AC.createMediaStreamDestination().$$

An input unit may also be configured on the audio processing module AC, and the corresponding processing may include following. The stream-pushing client terminal may configure a source data input unit and an additional data input unit on the audio processing module. The stream-pushing client terminal may build a source data processing line through the source data input unit and the hybrid output unit. The stream-pushing client terminal may build an additional data processing line through the additional data input unit and the hybrid output unit.

In the implementation, while configuring the hybrid output unit MDN, the stream-pushing client terminal may also configure the source data input unit MSN (MediaStreamAudioSourceNode) for inputting the source data OS in the audio processing module AC through a 'createMediaStreamSource' function. Then the stream-pushing client terminal may connect the source data input unit MSN and the hybrid output unit MDN through a 'connect' function, such that the source data OS may be transmitted through the source data input unit MSN and the hybrid output unit MDN in sequence, and may be processed correspondingly in each unit. In this way, a one-way line for processing the source data OS, i.e., the source data processing line built through the source data input unit MSN and the hybrid output unit MDN, may be formed.

The method for configuring the source data input unit MSN through the 'createMediaStreamSource' function may use the following formula:

$$MSN = AC.createMediaStreamSource(OS).$$

The method for connecting the source data input unit MSN and the hybrid output unit MDN through the 'connect' function may use the following formula:

$$MSN.connect(MDN).$$

Similarly, the stream-pushing client terminal may configure the additional data input unit BSN (AudioBufferSourceNode) for inputting the additional data FD in the audio processing module AC through a 'createBufferSource' function. Then, the stream-pushing client terminal may connect the additional data input unit BSN and the hybrid output unit MDN through the 'connect' function, such that the additional data FD may be transmitted through the additional data input unit BSN and the hybrid output unit MDN in sequence, and may be processed correspondingly in each unit. In this way, a one-way line for processing the additional data FD, i.e., the additional data processing line built through the additional data input unit BSN and the hybrid output unit MDN, may be formed.

The method for configuring the additional data input unit BSN through the 'createBufferSource' function may use the following formula:

$$BSN = AC.createBufferSource().$$

The method for connecting the additional data input unit BSN and the hybrid output unit MDN through the 'connect' function may use the following formula:

$$BSN.connect(MDN).$$

In step 102: The stream-pushing client terminal may input the source data and the additional data into the audio processing module, and may generate processed data through the hybrid output unit.

In the implementation, after the hybrid output unit MDN is configured, the stream-pushing client terminal may obtain the source data OS and the additional data FD, and may input the source data OS and the additional data FD to the audio processing module AC. Then, the stream-pushing client terminal may generate the processed data DS (DisposeStream) according to the source data OS and the additional data FD through the hybrid output unit MDN.

Based on the above built source data processing line and additional data processing line, the processing of step 102 may specifically include following. The stream-pushing client terminal may input the source data into the source data input unit, and may import output data of the source data input unit into the hybrid output unit through the source data processing line. The stream-pushing client terminal may input the additional data into the additional data input unit, and may import output data of the additional data input unit into the hybrid output unit through the additional data processing line. The stream-pushing client terminal may process the output data of the source data input unit and the output data of the additional data input unit through the hybrid output unit, to generate the processed data.

In the implementation, after the source data processing line and the additional data processing line are built, the stream-pushing client terminal may input the source data OS into the source data input unit MSN. According to the source data processing line, the stream-pushing client terminal may import the output data of the source data input unit MSN into the hybrid output unit MDN. The stream-pushing client terminal may input the additional data FD into the additional data input unit BSN. According to the additional data processing line, the stream-pushing client terminal may import the output data of the additional data input unit BSN into the hybrid output unit MDN. After importing the output data of the source data input unit MSN and the output data of the additional data input unit BSN into the hybrid output unit MDN, the two pieces of output data may be processed to generate the processed data DS.

In the process of processing the source data OS, sound volume of the source data OS may be adjusted, and the corresponding processing may include following. A source volume adjustment unit may be configured between the source data input unit and the hybrid output unit on the source data processing line. Through the source data processing line, the stream-pushing client terminal may import the output data of the source data input unit into the source volume adjustment unit, and may import the output data of the source volume adjustment unit into the hybrid output unit.

In the implementation, the stream-pushing client terminal may also configure the source volume adjustment unit GN (GainNode) in the audio processing module AC through a 'createGain' function.

The method for configuring the source volume adjustment unit GN through the 'createGain' function may use the following formula:

$$GN = AC.createGain().$$

Then, the stream-pushing client terminal may configure the source volume adjustment unit GN between the source data input unit MSN and the hybrid output unit MDN. Specifically, the stream-pushing client terminal may connect the source data input unit MSN, the source volume adjustment unit GN, and the hybrid output unit MDN in sequence through the 'connect' function, to form the source data processing line. Therefore, after the source data OS is inputted into the source data output unit MSN, the output data of the source data input unit MSN may be imported into the source volume adjustment unit GN, and output data processed by the source volume adjustment unit GN may be imported into the hybrid output unit MDN.

The method for connecting the source data input unit MSN, the source volume adjustment unit GN, and the hybrid output unit MDN in sequence through the 'connect' function may use the following formulas:

$$MSN.connect(GN);$$

and

$$GN.connect(MDN).$$

In the process of processing the additional data FD, sound volume of the additional data FD may be adjusted, and the corresponding processing may include following. An additional volume adjustment unit may be configured between the additional data input unit and the hybrid output unit on the additional data processing line. Through the additional data processing line, the stream-pushing client terminal may import the output data of the additional data input unit into the additional volume adjustment unit, and may import output data of the additional volume adjustment unit into the hybrid output unit.

In the implementation, the stream-pushing client terminal may also configure the additional volume adjustment unit GN1 in the audio processing module AC through the 'createGain' function.

The method for configuring the additional volume adjustment unit GN1 through the 'createGain' function may use the following formula:

$$GN1 = AC.createGain().$$

Then, the stream-pushing client terminal may configure the additional volume adjustment unit GN1 between the additional data input unit BSN and the hybrid output unit MDN. Specifically, the stream-pushing client terminal may connect the additional data input unit BSN, the additional volume adjustment unit GN1, and the hybrid output unit MDN in sequence through the 'connect' function, to form the additional data processing line. Therefore, after the additional data FD is inputted into the additional data output unit BSN, the output data of the additional data input unit BSN may be imported into the additional volume adjustment unit GN1, and output data processed by the additional volume adjustment unit GN1 may be imported into the hybrid output unit MDN.

The method for connecting the additional data input unit BSN, the additional volume adjustment unit GN1, and the hybrid output unit MDN in sequence through the 'connect' function may use the following formulas:

$$BSN.connect(GN1);$$

and

$$GN1.connect(MDN).$$

The additional data FD obtained by the stream-pushing client terminal may also need to undergo corresponding decoding processing to facilitate hybrid with the source data OS, and the corresponding processing may include following. The stream-pushing client terminal may call a 'decodeAudioData' function of the audio processing module to decode the additional data, and may input the decoded additional data into the additional data input unit.

In the implementation, after receiving the additional data FD, the stream-pushing client terminal may call the 'decodeAudioData' function of the audio processing module AC to decode the additional data FD, to obtain the audio pulse code modulation (PCM) data DFD, and then may input the decoded additional data DFD into the additional data input unit BSN.

The method for calling the 'decodeAudioData' function to decode the additional data FD may use the following formula:

$$DFD = AC.decodeAudioData(FD).$$

The above-mentioned processing procedure for generating the processed data DS from the source data OS and the additional data FD may be referred to Figure 2.

In the process of broadcasting the live audio and video, the broadcasted live audio and video data collected by the stream-pushing client terminal may be used as the source data OS, and the corresponding processing may include following. The stream-pushing client terminal may call a data collection interface of the browser to collect the source data, and may input the source data into the audio processing module.

In the implementation, audio and video collection devices, e.g., a camera and/or a microphone, may be built in or externally connected to the stream-pushing client terminal. When a user performs a live broadcast, the stream-pushing client terminal may call the data collection interface provided by the browser, e.g., a 'getUserMedia' interface, to start such collection devices to collect the audio and video data. The stream-pushing client terminal may use the collected audio and video data as the source data OS, and may input the source data OS into the audio processing module AC.

The method for collecting the source data OS through the 'getUserMedia' interface may include following:

```
getUserMedia (config)
.then ((stream) => {
OS = stream;
}).
```

To add any other audio and video during the process of broadcasting the live audio and video, the required audio and video data may be download from the network by the stream-pushing client terminal, and may be used as the additional data FD, and the corresponding processing may include following. The stream-pushing client terminal may call an additional data interface of the browser to obtain the additional data, and may input the additional data into the audio processing module.

In the implementation, during the live broadcast, user may need to add some audio and video, e.g., background music and special sound effect, etc., to improve the live broadcast effect. Therefore, such audio and video data may be obtained through the network. After obtaining a link address of the additional data FD, the stream-pushing client terminal may call the additional data interface provided by the browser, e.g., a 'XMLHttpRequest' interface, to download the audio and video data from the network as the additional data FD, and may input the additional data FD into the audio processing module AC.

In step 103: The stream-pushing client terminal may combine the source data and the processed data to generate the hybrid sound data.

In the implementation, after obtaining the processed data DS through the hybrid output unit MDN, the stream-pushing client terminal may combine the source data OS and the processed data DS, and may ultimately generate the hybrid sound data MS (MixingStream).

In an embodiment of the present disclosure, a page of the stream-pushing client terminal may include a stream-pushing region and a display region. The stream-pushing region may provide some common web page elements, e.g., buttons and text boxes. The stream-pushing user may perform corresponding operations to achieve the push of the hybrid sound data MS. The display region may provide a page external container (page div, page division). The page external container may interact with the stream-pushing client terminal to display the hybrid sound data MS pushed to the resource server, which may facilitate the stream-pushing client terminal to preview the effect of the hybrid sound data locally. After the stream-pushing client terminal generates the hybrid sound data MS, the hybrid sound data MS may be displayed in the display region in real time. Specifically, after generating the hybrid sound data MS, the stream-pushing client terminal may create a display video (Video) tag, and may load the hybrid sound data MS into the display video tag. Further, the playing attribute of the display video tag may be configured to be visible, such that the stream-pushing user may directly watch the screen image of the hybrid sound data MS from the outside. Then, the stream-pushing client terminal may create an internal container (internal div, internal division), and may display the hybrid sound data MS loaded in the display video tag in the internal container. Then, by recalling the internal container displaying the hybrid sound data MS, the browser page may fill the internal container displaying the hybrid sound data MS into the page external container configured in the browser page in advance. The page external container may customize the effect style of the screen display in the display region.

Because the source data OS itself contains audio data, directly combining the source data OS and the processed data DS may cause the hybrid sound data MS to contain multiple audio data, which may affect the encoding and decoding of the hybrid sound data MS in the transmission process. Therefore, the process for generating the hybrid sound data MS may include following. The stream-pushing client terminal may call a data processing interface of the browser to extract the video data in the source data. The stream-pushing client terminal may call the data processing interface of the browser to extract the audio data in the processed data. The stream-pushing client terminal may call the data processing interface of the browser to combine the video data and the audio data, to generate the hybrid sound data.

In the implementation, the data processing interface of the browser may be a 'MediaStream' interface or any other interface. After obtaining the processed data DS, the stream-pushing client terminal may call the 'MediaStream' interface of the browser and may extract the video data VT (VideoTracks) from the source data OS through a 'getVideoTracks' function.

The method for extracting the video data VT from the source data OS through the 'getVideoTracks' function may use the following formula:

$$VT = OS.getVideoTracks()[0].$$

At the same time, the stream-pushing client terminal may call a 'MediaStream' interface of the browser to extract the audio data AT (AudioTracks) from the processed data DS through a 'getAudioTracks' function.

The method for extracting the audio data AT from the processed data DS through the 'getAudioTracks' function may use the following formula:

$$AT = DS.getAudioTracks()[0].$$

Then, the stream-pushing client terminal may continue to call the 'MediaStream' interface of the browser to combine the extracted video data VT and the audio data AT to generate the hybrid sound data MS.

The method for combining the extracted video data VT and the audio data AT to generate the hybrid sound data MS may use the following formula:

$$MS = MediaStream([AT, VT]).$$

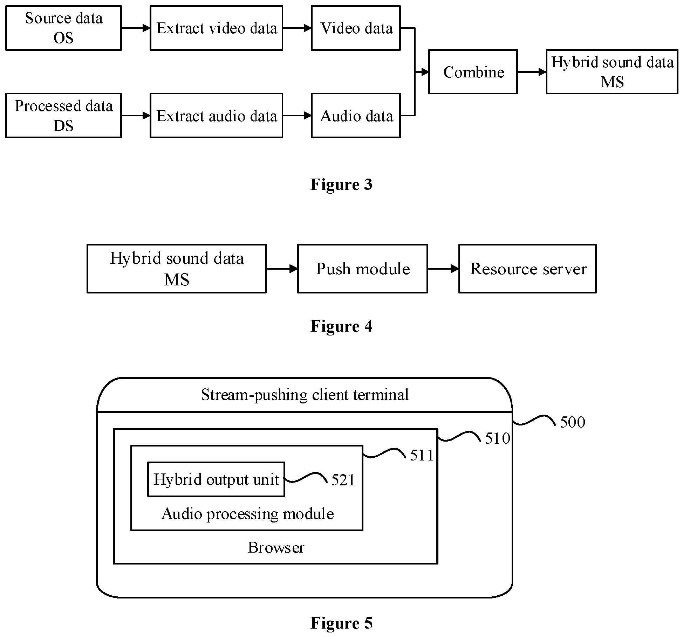

The above-mentioned processing procedure of combining the source data OS and the processed data DS to obtain the hybrid sound data MS may be referred to Figure 3. After the hybrid sound data MS is pushed to the resource server by the stream-pushing client terminal, the resource server may re-encode and re-decode the audio data and the video data of the hybrid sound data MS. Because the hybrid sound data MS obtained after being combined contains merely one audio data and one video data, in view of this, the codec compatibility of the resource server may be improved.

In step 104: The stream-pushing client terminal may push the hybrid sound data to the resource server, to enable the stream-pulling client terminal to obtain the hybrid sound data from the resource server.

In the implementation, after generating the hybrid sound data MS, the stream-pushing client terminal may push the hybrid sound data MS to the resource server. In view of this, after establishing a connection with the resource server, the stream-pulling client terminal may obtain the hybrid sound data MS from the resource server.

In an embodiment of the present disclosure, the page of the stream-pulling client terminal may include a stream-pulling region and a display region. The stream-pulling region may provide some common web page elements, e.g., buttons and text boxes. The stream-pulling user may perform corresponding operations to achieve the pull of the hybrid sound data MS. Specifically, after configuring the related streaming configuration information in the stream-pulling region, the stream-pulling client terminal may start pulling streaming. The stream-pulling user may check the screen of the hybrid sound data MS displayed in the display region, and through an audio output device, e.g., a headphone or a computer speaker, may listen to whether there is a mixing effect (e.g., simultaneously hearing the voice of a streaming anchor and background music).

Before sending the hybrid sound data MS to the resource server, the stream-pushing client terminal may need to establish a connection with the resource server, and the corresponding processing may include following. The stream-pushing client terminal may call a connection interface of the browser to create a push module. The stream-pushing client terminal may establish a connection with the resource server through the push module. The stream-pushing client terminal may input the hybrid sound data into the push module, and may push the hybrid sound data to the resource server through the push module.

In the implementation, when the audio and video data needs to be pushed to the resource server, the stream-pushing client terminal may call the connection interface provided by the browser to create the push module. The stream-pushing client terminal may often use an 'RTCPeerConnection' interface as the connection interface. The stream-pushing client terminal may establish the connection with the resource server based on the WebRTC protocol through the push module. After that, the stream-pushing client terminal may input the hybrid sound data MS into the push module, and then, may push the hybrid sound data MS to the resource server through the push module. The above process may be referred to Figure 4. Similarly, the stream-pulling client terminal may establish a connection with the resource server based on the WebRTC protocol. After the resource server receives the hybrid sound data MS, the stream-pulling client terminal that establishes the connection with the resource server may pull the hybrid sound data MS from the resource server.

In an embodiment of the present disclosure, the stream-pushing client terminal may call the audio interface of the browser to create the audio processing module, and may configure the hybrid output unit on the audio processing module. The stream-pushing client terminal may input the source data and the additional data into the audio processing module, and may generate the processed data through the hybrid output unit. The stream-pushing client terminal may combine the source data and the processed data to generate the hybrid sound data. The stream-pushing client terminal may push the hybrid sound data to the resource server, such that the stream-pulling client terminal may obtain the hybrid sound data from the resource server. In view of this, the source data and the additional data may be combined into one piece of hybrid sound data, which may reduce the transmission of one piece of data during the transmission process, and may reduce the bandwidth used in the transmission process. Merely one piece of data may need to be processed during playing and recording, which may support a substantially wide variety of browsers for playing, and may facilitate playback later.

Based on a same technical concept, the disclosed embodiments of the present disclosure further provide a stream-pushing client terminal for pushing audio and video based on a WebRTC protocol. Referring to Figure 5, the stream-pushing client terminal 500 may be configured to:

> call an audio interface of the browser 510 to create an audio processing module 511, and configure a hybrid output unit 521 on the audio processing module 511;
> input source data and additional data into the audio processing module 511, and generate processed data through the hybrid output unit 521;
> combine the source data and the processed data to generate hybrid sound data; and
> push the hybrid sound data to a resource server, and enable the stream-pulling client terminal to obtain the hybrid sound data from the resource server.

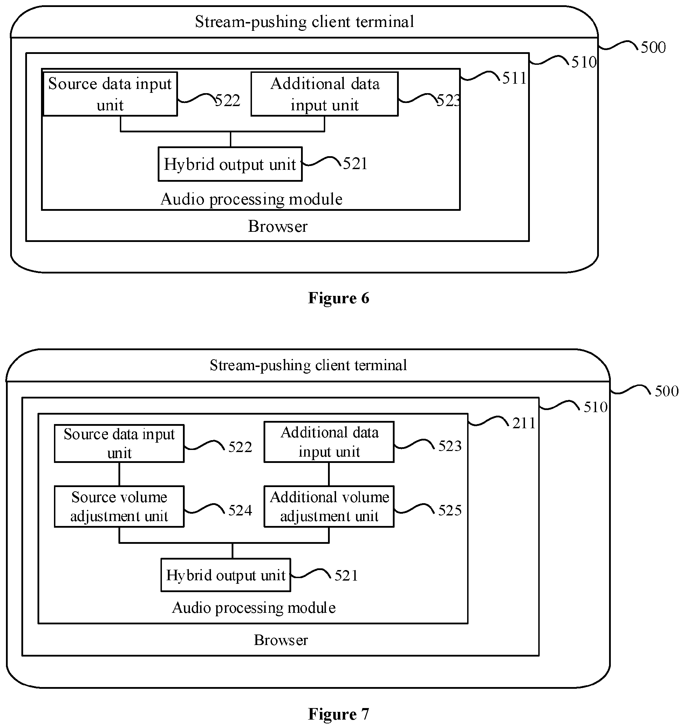

Optionally, referring to Figure 6, the stream-pushing client terminal 500 may be further configured to:

configure a source data input unit 522 and an additional data input unit 523 on the audio processing module 511;
build a source data processing line through the source data input unit 522 and the hybrid output unit 521; and
build an additional data processing line through the additional data input unit 523 and the hybrid output unit 521.

Optionally, the stream-pushing client terminal 500 may be specifically configured to:

input the source data into the source data input unit 522, and import output data of the source data input unit into the hybrid output unit 521 through the source data processing line;
input the additional data into the additional data input unit 523, and import output data of the additional data input unit into the hybrid output unit 521 through the additional data processing line; and
through the hybrid output unit 521, process the output data of the source data input unit 522 and the output data of the additional data input unit 523 to generate the processed data.

Optionally, referring to Figure 7, a source volume adjustment unit 524 may be configured between the source data input unit 522 and the hybrid output unit 521 on the source data processing line.

The stream-pushing client terminal 500 may be specifically configured to through the source data processing line, import the output data of the source data input unit 522 into the source volume adjustment unit 524, and import the output data of the source volume adjustment unit 524 into the hybrid output unit 521.

Optionally, referring to Figure 7, an additional volume adjustment unit 525 may be configured between the additional data input unit 523 and the hybrid output unit 521 on the additional data processing line.

The stream-pushing client terminal 500 may be specifically configured to import the output data of the additional data input unit 523 into the additional volume adjustment unit 525 through the additional data processing line, and import the output data of the additional volume adjustment unit 525 into the hybrid output unit 521.

Optionally, the stream-pushing client terminal 500 may be specifically configured to:
call a 'decodeAudioData' function of the audio processing module 511 to decode the additional data, and input the decoded additional data into the additional data input unit 521.

Optionally, the stream-pushing client terminal 500 may be specifically configured to:

call a data processing interface of the browser 510 to extract video data in the source data;
call the data processing interface of the browser 510 to extract audio data in the processed data; and
call the data processing interface of the browser 510 to combine the video data and the audio data to generate the hybrid sound data.

Optionally, the stream-pushing client terminal 500 may be further configured to:
call a data collection interface of the browser 510 to collect the source data, and input the source data into the audio processing module 511.

Optionally, the stream-pushing client terminal 500 may be further configured to:
call an additional data interface of the browser 510 to obtain the additional data, and input the additional data into the audio processing module 511.

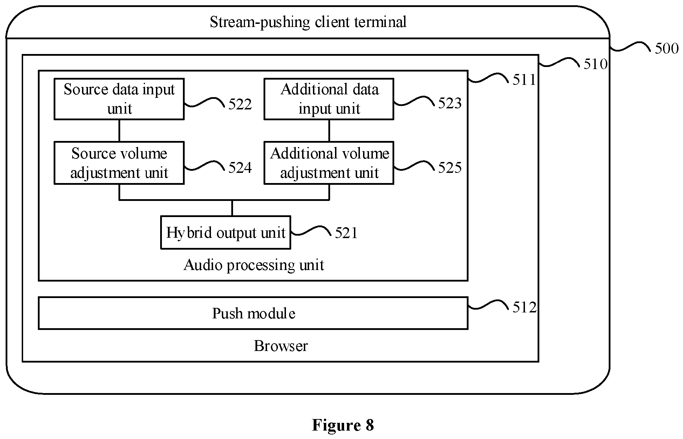

Optionally, referring to Figure 8, the stream-pushing client terminal 500 may be specifically configured to:

call a connection interface of the browser 510 to create a push module 512;
establish a connection with the resource server through the push module 512; and
input the hybrid sound data into the push module 512, and push the hybrid sound data to the resource server through the push module 512.

It should be noted that when the stream-pushing client terminal for pushing audio and video based on the WebRTC protocol provided by the above-disclosed embodiments implements the push of audio and video based on the WebRTC protocol, the division of the above functional modules is merely used as an example. In practical applications, the above functions may be allocated to be performed by different functional modules according to demands. In other words, the internal structure of the stream-pushing client terminal may be divided into different functional modules to perform all or part of the functions described above. At the same time, the stream-pushing client terminal for pushing audio and video based on the WebRTC protocol provided by the above-disclosed embodiments may belong to a same concept as the method for pushing audio and video based on the WebRTC protocol, and the specific implementation process thereof is described in the method embodiment, which is not repeated herein.

Through the description of the above embodiments, those skilled in the art can clearly understand that each embodiment may be implemented by means of software and a necessary universal hardware platform, and may also be implemented by hardware. Based on such understanding, the above-mentioned essential technical solution or part that contributes to the existing technology may be embodied in the form of a software product. The computer software product may be stored in a computer-readable storage medium, e.g., read-only memory (ROM)/random access memory (RAM), a magnetic disc, an optical disc, etc., and may include a plurality of instructions for enabling a computer device (e.g., a personal computer, a server, or a network device, etc.) to execute the method described in various embodiments or certain parts of the embodiments.

The above descriptions are merely the preferred embodiments of the present disclosure, and are not intended to limit the present disclosure. Any modifications, equivalents, improvements, etc., which are within the spirit and scope of the present disclosure, should be included in the protection of the present disclosure.

**Claims**

1. A method for pushing audio and video based on a WebRTC protocol, the method comprising:

   calling, by a stream-pushing client terminal, an audio interface of a browser to create an audio processing module, and configuring, by the stream-pushing client terminal, a hybrid output unit on the audio processing module;
   inputting, by the stream-pushing client terminal, source data and additional data to the audio processing module, and generating, by the stream-pushing client terminal, processed data through the hybrid output unit;
   combining, by the stream-pushing client terminal, the source data and the processed data to generate hybrid sound data; and
   pushing, by the stream-pushing client terminal, the hybrid sound data to a resource server, to enable a stream-pulling client terminal to obtain the hybrid sound data from the resource server.

2. The method according to claim 1, further including:

   configuring, by the stream-pushing client terminal, a source data input unit and an additional data input unit on the audio processing module;
   building, by the stream-pushing client terminal, a source data processing line through the source data input unit and the hybrid output unit; and
   building, by the stream-pushing client terminal, an additional data processing line through the additional data input unit and the hybrid output unit.

3. The method according to claim 2, wherein inputting, by the stream-pushing client terminal, the source data and the additional data to the audio processing module, and generating, by the stream-pushing client terminal, the processed data through the hybrid output unit include:

   inputting, by the stream-pushing client terminal, the source data to the source data input unit, and importing, by the stream-pushing client terminal, output data of the source data input unit into the hybrid output unit through the source data processing line;
   inputting, by the stream-pushing client terminal, the additional data to the additional data input unit, and importing, by the stream-pushing client terminal, output data of the additional data input unit into the hybrid output unit through the additional data processing line; and
   through the hybrid output unit, processing, by the stream-pushing client terminal, the output data of the source data input unit and the output data of the additional data input unit to generate the processed data.

4. The method according to claim 3, wherein a source volume adjustment unit is configured between the source data input unit and the hybrid output unit on the source data processing line, wherein:
   importing, by the stream-pushing client terminal, the output data of the source data input unit into the hybrid output unit through the source data processing line includes:
   through the source data processing line, importing, by the stream-pushing client terminal, the output data of the source data input unit into the source volume adjustment unit, and importing, by the stream-pushing client terminal, output data of the source volume adjustment unit into the hybrid output unit.

**5.** The method according to claim 3, wherein an additional volume adjustment unit is configured between the additional data input unit and the hybrid output unit on the additional data processing line, wherein:
importing, by the stream-pushing client terminal, the output data of the additional data input unit into the hybrid output unit through the additional data processing line includes:
through the additional data processing line, importing, by the stream-pushing client terminal, the output data of the additional data input unit into the additional volume adjustment unit, and importing, by the stream-pushing client terminal, output data of the additional volume adjustment unit into the hybrid output unit.

**6.** The method according to claim 3, wherein inputting, by the stream-pushing client terminal, the additional data to the additional data input unit includes:
calling, by the stream-pushing client terminal, a 'decodeAudioData' function of the audio processing module to decode the additional data, and inputting, by the stream-pushing client terminal, the decoded additional data to the additional data input unit.

**7.** The method according to claim 1, wherein combining, by the stream-pushing client terminal, the source data and the processed data to generate the hybrid sound data includes:

calling, by the stream-pushing client terminal, a data processing interface of the browser to extract video data in the source data;
calling, by the stream-pushing client terminal, the data processing interface of the browser to extract audio data in the processed data; and
calling, by the stream-pushing client terminal, the data processing interface of the browser to combine the video data and the audio data to generate the hybrid sound data.

**8.** The method according to claim 1, further including:
calling, by the stream-pushing client terminal, a data collection interface of the browser to collect the source data, and inputting, by the stream-pushing client terminal, the source data to the audio processing module.

**9.** The method according to claim 1, further including:
calling, by the stream-pushing client terminal, an additional data interface of the browser to obtain the additional data, and inputting, by the stream-pushing client terminal, the additional data to the audio processing module.

**10.** The method according to claim 1, wherein pushing, by the stream-pushing client terminal, the hybrid sound data to the resource server includes:

calling, by the stream-pushing client terminal, a connection interface of the browser to create a push module;
establishing, by the stream-pushing client terminal, a connection with the resource server through the push module; and
inputting, by the stream-pushing client terminal, the hybrid sound data to the push module, and pushing, by the stream-pushing client terminal, the hybrid sound data to the resource server through the push module.

**11.** A stream-pushing client terminal for pushing audio and video based on a WebRTC protocol, wherein the stream-pushing client terminal is configured to:

call an audio interface of a browser to create an audio processing module, and configure a hybrid output unit on the audio processing module;
input source data and additional data to the audio processing module, and generate processed data through the hybrid output unit;
combine the source data and the processed data to generate hybrid sound data; and
push the hybrid sound data to a resource server, to enable a stream-pulling client terminal to obtain the hybrid sound data from the resource server.

**12.** The stream-pushing client terminal according to claim 11, wherein the stream-pushing client terminal is further configured to:

configure a source data input unit and an additional data input unit on the audio processing module;
build a source data processing line through the source data input unit and the hybrid output unit; and
build an additional data processing line through the additional data input unit and the hybrid output unit.

**13.** The stream-pushing client terminal according to claim 12, wherein the stream-pushing client terminal is configured to:

input the source data to the source data input unit, and import output data of the source data input unit into the hybrid output unit through the source data processing line;
input the additional data to the additional data input unit, and import output data of the additional data input unit into the hybrid output unit through the additional data processing line; and
through the hybrid output unit, process the output data of the source data input unit and the output data of the additional data input unit to generate the processed data.

**14.** The stream-pushing client terminal according to claim 13, wherein a source volume adjustment unit is configured between the source data input unit and the hybrid output unit on the source data processing line; and
the stream-pushing client terminal is configured to through the source data processing line, import the output data of the source data input unit into the source volume adjustment unit, and import output data of the source volume adjustment unit into the hybrid output unit.

**15.** The stream-pushing client terminal according to claim 13, wherein an additional volume adjustment unit is configured between the additional data input unit and the hybrid output unit on the additional data processing line; and
the stream-pushing client terminal is configured to through the additional data processing line, import the output data of the additional data input unit into the additional volume adjustment unit, and import output data of the additional volume adjustment unit into the hybrid output unit.

**16.** The stream-pushing client terminal according to claim 13, wherein the stream-pushing client terminal is configured to:
call a 'decodeAudioData' function of the audio processing module to decode the additional data, and input the decoded additional data to the additional data input unit.

**17.** The stream-pushing client terminal according to claim 11, wherein the stream-pushing client terminal is configured to:

call a data processing interface of the browser to extract video data in the source data;
call the data processing interface of the browser to extract audio data in the processed data; and
call the data processing interface of the browser to combine the video data and the audio data to generate the hybrid sound data.

**18.** The stream-pushing client terminal according to claim 11, wherein the stream-pushing client terminal is further configured to:
call a data collection interface of the browser to collect the source data, and input the source data to the audio processing module.

**19.** The stream-pushing client terminal according to claim 11, wherein the stream-pushing client terminal is further configured to:
call an additional data interface of the browser to obtain the additional data, and input the additional data to the audio processing module.

**20.** The stream-pushing client terminal according to claim 11, wherein the stream-pushing client terminal is configured to:

call a connection interface of the browser to create a push module;
establish a connection with the resource server through the push module; and
input the hybrid sound data to the push module, and push the hybrid sound data to the resource server through the push module.

Calling, by a stream-pushing client terminal, an audio interface of a browser to create an audio processing module, and configuring a hybrid output unit on the audio processing module

101

Inputting, by the stream-pushing client terminal, source data and additional data to the audio processing module, and generating processed data through the hybrid output unit

102

Combining, by the stream-pushing client terminal, the source data and the processed data to generate hybrid sound data

103

Pushing, by the stream-pushing client terminal, the hybrid sound data to a resource server, to enable a stream-pulling client terminal to obtain the hybrid sound data from the resource server

104

**Figure 1**

Additional data input unit
BSN

Decode

Additional data
FD

Additional volume adjustment unit
GN1

Create audio processing module
AC

Hybrid output unit
MDN

Processed data
DS

Source volume adjustment unit
GN

Source data input unit
MSN

Source data
OS

**Figure 2**

| Source data OS | → | Extract video data | → | Video data |
| Processed data DS | → | Extract audio data | → | Audio data |

Video data and Audio data → Combine → Hybrid sound data MS

**Figure 3**

| Hybrid sound data MS | → | Push module | → | Resource server |

**Figure 4**

Stream-pushing client terminal ⟍ 500

⟍ 510

Browser ⟍ 511

Audio processing module ⟍ 521

Hybrid output unit

**Figure 5**

Stream-pushing client terminal

Source data input unit — 522

Additional data input unit — 523

Hybrid output unit — 521

Audio processing module

Browser

~500

~510

~511

**Figure 6**

Stream-pushing client terminal

Source data input unit — 522

Additional data input unit — 523

Source volume adjustment unit — 524

Additional volume adjustment unit — 525

Hybrid output unit — 521

Audio processing module

Browser

~500

~510

~211

**Figure 7**

Stream-pushing client terminal

500

510

511

Source data input unit 522

Additional data input unit 523

Source volume adjustment unit 524

Additional volume adjustment unit 525

Hybrid output unit 521

Audio processing unit

Push module 512

Browser

**Figure 8**

## INTERNATIONAL SEARCH REPORT

| International application No. |
| --- |
| **PCT/CN2019/072181** |

### A. CLASSIFICATION OF SUBJECT MATTER

H04N 21/435(2011.01)i; H04L 29/06(2006.01)i

According to International Patent Classification (IPC) or to both national classification and IPC

### B. FIELDS SEARCHED

Minimum documentation searched (classification system followed by classification symbols)

H04N; H04L

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT: 直播, 混合, 混音, 叠加, 音频, 特效, 背景, 多个, 流媒体, live, broadcast, mix+, audio, stream, multimedia, background

### C. DOCUMENTS CONSIDERED TO BE RELEVANT

| Category* | Citation of document, with indication, where appropriate, of the relevant passages | Relevant to claim No. |
| --- | --- | --- |
| X | CN 107027050 A (GUANGZHOU HUADUO NETWORK TECHNOLOGY CO., LTD.) 08 August 2017 (2017-08-08) description, paragraphs [0033]-[00441], and figure 1 | 1-20 |
| X | CN 106331736 A (WUHAN DOUYU NETWORK TECHNOLOGY CO., LTD.) 11 January 2017 (2017-01-11) description, paragraphs [0029]-[0049], and figures 1 and 2 | 1-20 |
| A | CN 106412663 A (LETV HOLDINGS (BEIJING) CO., LTD. et al.) 15 February 2017 (2017-02-15) entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 August 2019** | **10 September 2019** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| | International application No. |
|---|---|
| | **PCT/CN2019/072181** |

| Patent document cited in search report | | | Publication date (day/month/year) | Patent family member(s) | Publication date (day/month/year) |
|---|---|---|---|---|---|
| CN | 107027050 | A | 08 August 2017 | None | |
| CN | 106331736 | A | 11 January 2017 | None | |
| CN | 106412663 | A | 15 February 2017 | None | |

Form PCT/ISA/210 (patent family annex) (January 2015)